# DEMANDE DE BREVET EUROPEEN

(11) **EP 4 148 569 A1**
(43) Date de publication de la demande: **15.03.2023**
(21) Numéro de dépôt: 21306258.1
(22) Date de dépôt: 13.09.2021
(51) Int. Cl.: G06F 9/48, G06F 9/50

(54) **PROCÉDÉ D'ORDONNANCEMENT D'UN ENSEMBLE DE TACHES DE CALCUL DANS UN SUPERCALCULATEUR**

(71) Demandeur: Bull SAS, 78340 Les Clayes-sous-Bois (FR)
(72) Inventeur: SEROUL, Pierre, 38650 Sinard (FR)
(74) Mandataire: Cabinet Camus Lebkiri

(57) **Abrégé**

L'invention concerne un procédé d'ordonnancement de tâches de calcul sur un supercalculateur comprenant :
- l'apprentissage par renforcement (OFRL) hors ligne d'un ordonnanceur sur une base de données (LDB), la base de données comprenant au moins un historique d'exécution (HIST) comprenant :
- l'état (LHPCS) d'un supercalculateur d'apprentissage à plusieurs instants (T, T-1) ;
- les actions (LACT) relatives à l'ordonnancement de tâches d'apprentissage sur le supercalculateur d'apprentissage à ces instants (T) ; et
- une récompense (REW) relative à chaque tâche ;

- l'utilisation de l'ordonnanceur entraîné sur les tâches de calcul à ordonnancer.

## Description

### DOMAINE TECHNIQUE DE L'INVENTION

Le domaine technique de l'invention est celui de l'ordonnancement de tâches de calcul sur un supercalculateur.

L'invention concerne un procédé d'ordonnancement d'un ensemble de tâches de calcul stocké dans une file d'attente d'un supercalculateur. L'invention concerne également un environnement de calcul et un programme d'ordinateur mettant en œuvre le procédé selon l'invention.

### ARRIÈRE-PLAN TECHNOLOGIQUE DE L'INVENTION

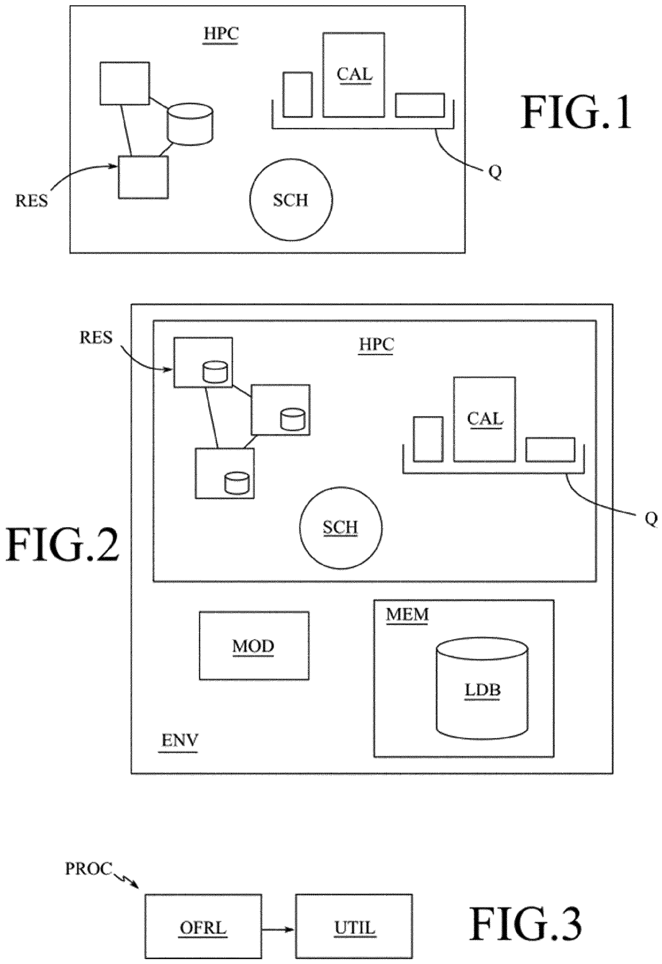

Un supercalculateur haute performance, aussi appelé HPC pour *High Performance Computing* en anglais, est un système complexe permettant le traitement de tâche de calcul par lots (*batch jobs* en anglais). Un supercalculateur HPC, tel qu'illustré en [FIG.1], comprend notamment des ressources informatiques RES telles que des nœuds de calcul, des nœuds de stockage et au moins un réseau permettant leur interconnexion. Un supercalculateur HPC comprend également une file d'attente Q destinée à stocker des tâches de calcul CAL en attente d'être exécutées.

Lorsqu'un utilisateur souhaite réaliser une tâche de calcul CAL sur le supercalculateur HPC, il renseigne le besoin en ressources informatiques nécessaires à son exécution et la tâche est ajoutée à la file d'attente Q, en attente de sa planification. Par planification, on entend notamment la détermination de l'ordre d'exécution et des instants d'exécution des tâches de calcul CAL de la file d'attente Q.

La planification des tâches CAL de la file d'attente Q et l'allocation des ressources informatiques RES pour leur exécution est appelée ordonnancement et est assurée par un composant informatique SCH appelé planificateur ou ordonnanceur. L'ordonnanceur SCH fait par exemple partie du noyau du supercalculateur. L'ordonnanceur SCH tente de planifier les tâches de calcul CAL de manière optimale en fonction des ressources informatiques RES disponibles, c'est-à-dire qui ne sont pas déjà en train d'exécuter des tâches de calcul, et dans un ordre qui permettra d'optimiser une grandeur observable, dite "métrique". La métrique est, par exemple, le niveau d'utilisation des ressources de calcul à chaque instant, le temps d'attente des tâches avant leur exécution ou encore le nombre de tâches exécutées par unité de temps. L'ordonnanceur doit alors déterminer quelle tâche de calcul de la file d'attente exécuter en premier et à quel moment, afin d'améliorer la métrique.

Pour cela, l'ordonnanceur suit une politique d'ordonnancement lui dictant la planification des tâches à mettre en œuvre en fonction des ressources informatiques disponibles, de la durée d'attente des tâches dans la file d'attente ou des besoins de chaque tâche en ressources informatiques. La politique d'ordonnancement peut être établie de manière empirique, par exemple par un expert. L'expert prend alors en compte les caractéristiques du supercalculateur visé et des tâches typiques à ordonnancer. Cette méthode d'établissement a en revanche le désavantage de nécessiter l'intervention d'un expert dès qu'il est nécessaire d'ajuster la politique à un changement de caractéristique du supercalculateur ou un changement d'utilisation.

Pour remédier à ces inconvénients, des solutions permettant d'établir les politiques d'ordonnancement de manière automatique ont été proposées. Parmi les solutions proposées, l'apprentissage par renforcement en ligne, ou *online* en anglais, de l'ordonnanceur nécessite une intervention manuelle réduite et permet d'obtenir une politique d'ordonnancement présentant une métrique au moins équivalente à une politique d'ordonnancement établie par un expert, capable de s'adapter lors de variations d'utilisation du supercalculateur HPC. L'apprentissage par renforcement en ligne consiste à mettre en interaction l'ordonnanceur SCH avec le supercalculateur HPC et la file d'attente Q correspondante pour que l'ordonnanceur SCH apprenne de manière autonome à répartir les tâches de calcul CAL en attente dans la file Q en fonction des ressources RES disponibles et des métriques ciblées.

Lors de l'apprentissage par renforcement en ligne, l'ordonnanceur SCH reçoit l'état du système, comprenant l'état du supercalculateur HPC comprenant par exemple la quantité de ressources informatiques disponibles, et l'état de la file d'attente Q comprenant par exemple le nombre de tâches de calcul CAL en attente et les besoins en ressources informatiques de chacune des tâches. L'ordonnanceur SCH décide d'une action, qui peut être d'affecter une ou plusieurs tâches CAL de la file d'attente Q à des ressources disponibles ou encore de ne rien exécuter pour le moment. À la suite de cette action, l'ordonnanceur reçoit l'état du système après réalisation de l'action et calcule une récompense associée à l'action, représentative de la métrique visée. La récompense peut être positive lorsqu'elle contribue à améliorer la métrique, par exemple réduction du nombre de tâches dans la file d'attente, réduction du temps d'attente moyen ou augmentation des ressources informatiques utilisées, ou négative lorsqu'elle dégrade la métrique, par exemple augmentation du temps d'attente moyen ou sous-utilisation des ressources informatiques. Après plusieurs itérations, l'ordonnanceur SCH détermine une politique d'ordonnancement correspondant à une liste d'actions permettant d'améliorer la métrique.

Toutefois, l'apprentissage par renforcement en ligne nécessite un grand nombre d'itérations entre l'ordonnanceur SCH et le supercalculateur HPC avant que la politique d'ordonnancement ne devienne efficace puisque l'apprentissage par renforcement en ligne est principalement réalisé par tâtonnement, *trials and errors* en anglais. Ainsi, l'ordonnanceur répartit généralement les tâches de manière sousoptimale pendant une longue période avant de fournir une répartition optimale, provoquant ainsi une baisse drastique des métriques ciblées et rendant le supercalculateur inutilisable.

Pour remédier à cet inconvénient, il est connu de remplacer le supercalculateur HPC par un simulateur, simulant le comportement du supercalculateur HPC. Cependant, ce dernier doit présenter une fidélité élevée avec le supercalculateur HPC ciblé pour que la politique établie soit la plus optimale possible, ce qui semble impossible dans la mesure où il est difficile d'appréhender la complexité inhérente aux supercalculateurs afin d'établir un simulateur SIM convaincant dans tous les cas d'utilisation.

Il existe donc un besoin d'améliorer l'ordonnancement de tâches de calcul sur un supercalculateur.

### RÉSUME DE L'INVENTION

L'invention offre une solution aux problèmes évoqués précédemment, en permettant d'établir une politique d'ordonnancement de tâches de calcul de manière automatique et sans recourir à la mise en œuvre d'un simulateur de supercalculateur. Dès lors, libéré des hypothèses faites sur le simulateur d'un supercalculateur, l'ordonnancement des tâches de calcul sur le supercalculateur est amélioré.

Pour cela, l'invention concerne un procédé d'ordonnancement d'un ensemble de tâches de calcul stocké dans une file d'attente d'un supercalculateur, l'ordonnancement comprenant la planification de l'exécution de chaque tâche de calcul de l'ensemble de tâches de calcul par le supercalculateur et l'allocation d'au moins une ressource informatique du supercalculateur à l'exécution de chaque tâche de calcul de l'ensemble de tâches de calcul, le procédé comprenant les étapes suivantes :
- l'apprentissage par renforcement hors ligne d'un ordonnanceur sur une base de données d'apprentissage pour obtenir un ordonnanceur entraîné capable d'ordonnancer un ensemble de tâches de calcul, la base de données d'apprentissage comprenant au moins un historique d'exécution, chaque historique d'exécution étant associé à un supercalculateur d'apprentissage et comprenant, à chaque instant donné d'un intervalle de temps :
   - un état d'une file d'attente du supercalculateur d'apprentissage à l'instant donné, ladite file d'attente stockant un ensemble de tâches de calcul d'apprentissage ;
   - un état du supercalculateur d'apprentissage à l'instant donné ;
   - chaque action relative à l'ordonnancement des tâches de calcul d'apprentissage effectuée à l'instant donné, ledit ordonnancement étant mis en œuvre par un ordonnanceur d'apprentissage sur la base de l'état de la file d'attente du supercalculateur d'apprentissage et de l'état du supercalculateur d'apprentissage à l'instant précédent l'instant donné ;
   - une récompense relative à chaque action, chaque récompense étant calculée sur la base de l'état de la file d'attente du supercalculateur d'apprentissage et de l'état du supercalculateur d'apprentissage à l'instant donné et à l'instant précédent l'instant donné ;
- l'utilisation de l'ordonnanceur entraîné sur l'ensemble de tâches de calcul stocké dans la file d'attente du supercalculateur.

Grâce à l'invention, l'ordonnancement des tâches de calcul à exécuter par un supercalculateur est réalisé par un ordonnanceur ayant été entraîné par renforcement sur des historiques d'exécution et donc des données réelles, provenant d'autres supercalculateurs, dits supercalculateurs d'apprentissage. Chaque historique d'exécution comportant l'état du supercalculateur d'apprentissage associé à chaque instant d'un intervalle de temps, il n'est pas nécessaire de recourir à un simulateur de supercalculateurs et l'ordonnancement de l'ensemble des tâches de calcul est donc amélioré.

La base de données d'apprentissage pouvant comporter des historiques d'exécution provenant de n'importe quel supercalculateur, y compris du supercalculateur sur lequel l'ensemble de tâches de calcul doit être ordonnancé, la quantité de données permettant de réaliser l'apprentissage peut donc être très importante et ainsi permettre d'améliorer davantage l'ordonnancement des tâches de calcul.

Outre les caractéristiques qui viennent d'être évoquées dans le paragraphe précédent, le procédé selon l'invention peut présenter une ou plusieurs caractéristiques complémentaires parmi les suivantes, considérées individuellement ou selon toutes les combinaisons techniquement possibles :
- chaque historique d'exécution est obtenu à partir d'un journal d'exécution du supercalculateur d'apprentissage correspondant ;
- chaque récompense est déterminée à partir du journal d'exécution ;
- l'étape d'apprentissage comporte une sous-étape de calcul par l'ordonnanceur, d'au moins un retour correspondant à une somme d'une pluralité de récompenses ;
- l'ordonnanceur entrainé est capable d'ordonnancer un ensemble de tâches de calcul de manière à optimiser une métrique et chaque récompense est basée sur ladite métrique ;
- chaque historique d'exécution comprend, à chaque instant donné de l'intervalle de temps, au moins une caractéristique de calcul associée à chaque tâche de calcul d'apprentissage ;
- chaque caractéristique de calcul peut être choisie parmi le groupe de caractéristiques suivant : une durée d'exécution requise, un nombre de ressources informatiques requises, un identifiant de tâche, un identifiant d'utilisateur ou un identifiant d'un groupe d'utilisateurs ;
- le nombre de ressources informatiques requises comprend un nombre de nœuds de calcul requis ou un nombre de nœuds de stockage requis ;
- chaque historique d'exécution comprend en outre, à chaque instant donné de l'intervalle de temps, le temps passé par chaque tâche de calcul d'apprentissage dans la file d'attente correspondante ;
- chaque historique d'exécution comprend, à chaque instant donné de l'intervalle de temps et pour chaque tâche de calcul d'apprentissage, une information sur la possibilité de démarrer l'exécution de ladite tâche de calcul d'apprentissage audit instant donné ;
- chaque historique d'exécution comprend, à chaque instant donné de l'intervalle de temps et pour chaque tâche de calcul d'apprentissage, un rapport entre un nombre de ressources informatiques requises par ladite tâche de calcul d'apprentissage et un nombre de ressources informatiques non allouées du supercalculateur d'apprentissage ;
- chaque historique d'exécution comprend également, à chaque instant donné de l'intervalle de temps et pour chaque tâche de calcul d'apprentissage, un rapport entre un nombre de ressources informatiques requises par ladite tâche de calcul d'apprentissage et un nombre de ressources informatiques non allouées du supercalculateur d'apprentissage à au moins un instant futur postérieur à l'instant donné.
- l'apprentissage par renforcement hors ligne met en œuvre une régression pondérée par un avantage.

L'invention concerne en outre un environnement de calcul configuré pour mettre en œuvre le procédé d'ordonnancement selon l'invention, l'environnement de calcul comprenant :
- un module de calcul configuré pour réaliser l'apprentissage par renforcement hors ligne de l'ordonnanceur sur la base de données d'apprentissage ;
- au moins un module de stockage configuré pour stocker la base de données d'apprentissage ;
- le supercalculateur comportant la file d'attente sur laquelle est stocké l'ensemble de tâches de calcul à ordonnancer, configuré pour utiliser l'ordonnanceur entraîné par le module de calcul sur l'ensemble de tâches de calcul à ordonnancer.

L'invention concerne également un programme d'ordinateur comprenant des instructions qui, lorsque le programme est exécuté par un ordinateur, conduisent celui-ci à mettre en œuvre le procédé selon l'invention.

L'invention et ses différentes applications seront mieux comprises à la lecture de la description qui suit et à l'examen des figures qui l'accompagnent.

### BRÈVE DESCRIPTION DES FIGURES

Les figures sont présentées à titre indicatif et nullement limitatif de l'invention.
[FIG.1] présente schématiquement un exemple de supercalculateur selon l'art antérieur.
[FIG.2] présente schématiquement un mode de réalisation d'un environnement de calcul selon l'invention.
[FIG.3] présente schématiquement un mode de mise en œuvre d'un procédé selon l'invention.
[FIG.4] présente schématiquement un exemple d'un supercalculateur d'apprentissage selon l'invention.
[FIG.5] présente schématiquement un mode de mise en œuvre d'une étape d'apprentissage par renforcement hors ligne du procédé de la [FIG.3].

Sauf précision contraire, un même élément apparaissant sur des figures différentes présente une référence unique.

### DESCRIPTION DÉTAILLÉE

La [FIG.1] a déjà été décrite en référence à l'état de la technique.

L'invention a pour objet l'ordonnancement de tâches de calcul sur un supercalculateur, les tâches de calcul étant destinées à être exécutées par le supercalculateur. Par ordonnancement, on entend :
- la planification de l'exécution des tâches de calcul par ledit supercalculateur ; et
- l'allocation d'au moins une ressource informatique du supercalculateur à l'exécution de chaque tâche de calcul.

La planification consiste à définir un ordre d'exécution pour les tâches de calcul et/ou un instant auquel l'exécution de chaque tâche de calcul débute. L'invention propose d'ordonnancer un ensemble de tâches de calcul au moyen d'un ordonnanceur entraîné, ce dernier étant entraîné de manière automatique et sans recourir à la mise en œuvre d'un simulateur de supercalculateur.

L'invention concerne également un environnement de calcul ENV dont un mode de réalisation est représenté schématiquement à la [FIG.2]. L'environnement de calcul ENV est configuré pour mettre en œuvre le procédé d'ordonnancement selon l'invention. Il comprend notamment :
- un module de calcul MOD configuré pour réaliser l'apprentissage par renforcement hors ligne d'un ordonnanceur SCH sur une base de données d'apprentissage LDB ;
- au moins un module de stockage MEM configuré pour stocker la base de données d'apprentissage LDB ; et
- le supercalculateur HPC.

Le supercalculateur HPC comprend une file d'attente Q sur laquelle est stocké l'ensemble de tâches de calcul CAL à ordonnancer. Il est également configuré pour utiliser l'ordonnanceur SCH entraîné par le module de calcul MOD sur l'ensemble de tâches de calcul CAL à ordonnancer.

Le supercalculateur HPC comprend des ressources informatiques RES, que l'on appelle également simplement ressources. Une ressource RES peut comprendre un nœud de calcul et/ou un nœud de stockage et permet ainsi, par exemple, de réaliser les instructions des tâches de calcul CAL et/ou stocker des résultats des tâches de calcul CAL. Un nœud de calcul peut être formé par un processeur informatique ou un ensemble de processeurs informatiques connectés les uns aux autres. Un processeur informatique peut être un processeur central également appelé *central processing unit en* anglais, abrégé CPU, ou un processeur graphique appelé *graphical processing unit en* anglais, abrégé GPU. Un nœud de stockage peut comprendre une mémoire rapide, une mémoire pérenne ou encore une base de données. Le supercalculateur HPC comprend également avantageusement un réseau d'interconnexion permettant de mettre les différents nœuds en relation. Le supercalculateur HPC peut présenter plusieurs types d'architectures. L'exemple présenté à la [FIG.2] correspond à un supercalculateur HPC à architecture distribuée appelée grappe d'ordinateurs. Dans cet exemple, plusieurs ordinateurs, formant dans ce cas plusieurs ressources RES, comprennent chacun un nœud de calcul et un nœud de stockage et sont mis en réseau par un réseau d'interconnexion. Ils forment ainsi la grappe d'ordinateurs. Le supercalculateur HPC peut également présenter une architecture centralisée, telle qu'illustrée à la [FIG.1], où chaque nœud, préférentiellement différentié selon qu'il s'agisse d'un nœud de calcul ou de stockage, est mis en relation avec une partie des autres nœuds du supercalculateur par un réseau d'interconnexion.

La file d'attente Q du supercalculateur HPC est un composant informatique configuré pour stocker les tâches de calcul CAL. La file d'attente Q appartient au supercalculateur HPC de sorte que les tâches de calcul CAL qu'elle stocke sont exécutées par ledit supercalculateur HPC. Selon une variante de réalisation du supercalculateur HPC, plusieurs files d'attente peuvent appartenir au supercalculateur. Le mode de mise en œuvre de l'invention décrit ci-après concerne un supercalculateur HPC comprenant une seule file d'attente Q mais il peut être généralisé à la variante précitée.

L'ordonnanceur SCH est un composant informatique configuré pour ordonnancer des tâches de calcul CAL sur le supercalculateur HPC et plus particulièrement, ordonnancer les tâches de calcul CAL stockées dans la file d'attente Q de sorte qu'elles soient exécutées par le supercalculateur HPC. L'ordonnanceur SCH est en outre chargé de planifier l'exécution des tâches de calcul CAL par le supercalculateur HPC et allouer un nombre de ressource RES du supercalculateur à l'exécution desdites tâches de calcul CAL. L'ordonnanceur SCH appartient préférentiellement au supercalculateur HPC. Il fait par exemple partie du noyau d'un système d'exploitation du supercalculateur HPC. Le procédé d'ordonnancement selon l'invention comporte une étape d'apprentissage par renforcement hors ligne de l'ordonnanceur SCH. Aussi, l'ordonnanceur SCH comprend avantageusement au moins un algorithme basé sur de l'apprentissage automatique, par exemple un réseau de neurones artificiels. L'apprentissage de l'ordonnanceur SCH peut ainsi suivre deux méthodes d'apprentissage. Il peut s'agir d'une méthode dite acteur critique, dans lequel deux réseaux de neurones artificiels appartenant à l'ordonnanceur SCH déterminent, à partir de l'état d'un système, une probabilité de sélection d'une action parmi une pluralité d'actions et une valeur de l'état du système. Il peut également s'agir d'une méthode dite de *Q-Learning* en anglais, selon laquelle au moins un réseau de neurones artificiels appartenant à l'ordonnanceur SCH détermine, à partir de l'état d'un système, une valeur associée à chaque action parmi une pluralité d'actions. Chaque réseau de neurones artificiels est par exemple implémenté avec la bibliothèque "Pytorch" ou "Tensorflow".

Chaque module de stockage MEM peut être un serveur de données ou un disque dur, par exemple connecté au supercalculateur HPC.

Le module de calcul MOD peut mettre en œuvre un algorithme de régression pondéré par un avantage, appelé *advantage-weighted regression* en anglais ou AWR. Il peut également mettre en œuvre d'autres algorithmes tels que l'algorithme *Q-Learning* conservatif ou CQL, l'algorithme de réduction de l'accumulation d'erreurs par rééchantillonnage BEAR ou encore l'algorithme Q-*Learning* contraint par lots ou BCQ.

La [FIG.3] présente un premier mode de mise en œuvre du procédé PROC selon l'invention, destiné à ordonnancer l'ensemble des tâches de calcul CAL stocké dans la file d'attente Q du supercalculateur HPC.

Le procédé PROC comprend une première étape d'apprentissage par renforcement hors ligne OFRL de l'ordonnanceur SCH sur la base de données d'apprentissage LDB pour obtenir un ordonnanceur SCH entraîné capable d'ordonnancer un ensemble de tâches de calcul CAL. La base de données d'apprentissage LDB comprend au moins un historique d'exécution, obtenu d'un supercalculateur d'apprentissage. Chaque historique d'exécution comprend alors, à chaque instant donné d'un intervalle de temps :
- un état d'une file d'attente du supercalculateur d'apprentissage à l'instant donné, ladite file d'attente stockant un ensemble de tâches de calcul d'apprentissage ; et
- un état du supercalculateur d'apprentissage à l'instant donné.

Chaque historique d'exécution comprend en outre, à chaque instant donné, chaque action relative à l'ordonnancement des tâches de calcul d'apprentissage effectuée à l'instant donné. L'ordonnancement des tâches de calcul d'apprentissage est mis en œuvre par un ordonnanceur d'apprentissage sur la base de l'état de la file d'attente du supercalculateur d'apprentissage et de l'état du supercalculateur d'apprentissage à l'instant précédent l'instant donné.

Chaque historique d'exécution comprend également, à chaque instant donné, une récompense relative à chaque action. Chaque récompense est calculée sur la base de l'état de la file d'attente du supercalculateur d'apprentissage et de l'état du supercalculateur d'apprentissage à l'instant donné et à l'instant précédent l'instant donné.

Par "apprentissage par renforcement hors ligne" on entend que l'apprentissage par renforcement est réalisé sans interaction directe entre l'ordonnanceur SCH et un supercalculateur ou entre l'ordonnanceur SCH et un simulateur de supercalculateur. Autrement dit, l'apprentissage est réalisé sans retour d'un supercalculateur ou d'un simulateur après une action de l'ordonnanceur SCH. À l'inverse, lors de l'apprentissage par renforcement réalisé en ligne, présenté en référence à l'art antérieur, l'état d'un supercalculateur ou d'un simulateur est mis à jour après chaque action de l'ordonnanceur. L'apprentissage hors ligne OFRL de l'ordonnanceur SCH est notamment rendu possible grâce à l'utilisation de la base de données d'apprentissage LDB. La base de données d'apprentissage LDB remplace alors l'interaction ordonnanceur/supercalculateur ou l'interaction ordonnanceur/simulateur.

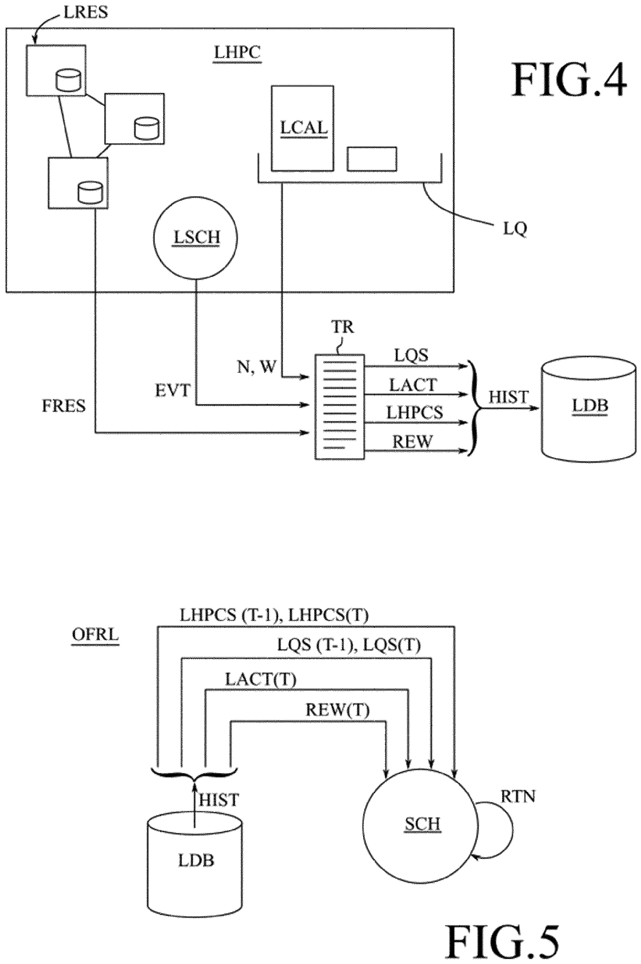

La [FIG.4] présente schématiquement les données appartenant à un historique d'exécution HIST ainsi qu'un exemple de procédé permettant la constitution cet historique d'exécution HIST. La [FIG.4] présente également schématiquement un exemple de supercalculateur d'apprentissage LHPC à partir duquel est obtenu l'historique d'exécution HIST. Le supercalculateur d'apprentissage LHPC comprend préférentiellement une file d'attente d'apprentissage LQ et un ordonnanceur d'apprentissage LSCH. La file d'attente d'apprentissage LQ est configurée pour stocker un ensemble de tâches de calcul d'apprentissage LCAL destinées à être exécutées par le supercalculateur d'apprentissage LHPC, par exemple au moyen de ressources informatiques LRES. L'ordonnancement des tâches d'apprentissage LCAL est réalisé par l'ordonnanceur d'apprentissage LSCH. En ce sens, le supercalculateur d'apprentissage LHPC peut être un supercalculateur selon l'art antérieur, tel que celui illustré par la [FIG.1]. L'ordonnanceur d'apprentissage LSCH peut avoir suivi un apprentissage par renforcement en ligne, tel que présenté en référence à l'art antérieur, afin d'être capable d'ordonnancer l'ensemble des tâches de calcul d'apprentissage LCAL. À chaque instant, l'ordonnanceur d'apprentissage LSCH peut ordonnancer les tâches d'apprentissage LCAL sur la base des états LQS, LHPCS de la file d'attente d'apprentissage LQ et du supercalculateur d'apprentissage LHPC à l'instant précédent l'instant. Il peut également prendre en compte des instants antérieurs audit instant précédent. En effet, l'ordonnancement des tâches d'apprentissage LCAL peut être réalisé selon une politique d'ordonnancement qui peut être différente de la politique recherchée pour l'ordonnanceur SCH à entraîner. Il peut s'agir d'une politique d'ordonnancement selon l'art antérieur ou développée par un expert. Les éléments considérés pour déterminer chaque action de l'ordonnanceur d'apprentissage LSCH ne sont donc pas forcément connus.

L'ordonnanceur d'apprentissage LSCH peut être un système de gestion de tâche et de ressources, appelé *Resource and Job Management System* en anglais ou abrégé RJMS. Les bibliothèques permettant de développer un RJMS sont par exemple "Slurm", "OAR", "PBS", "Torque" ou encore "Flux".

Le supercalculateur d'apprentissage LHPC ou l'ordonnanceur d'apprentissage LSCH peut générer un journal d'exécution TR, également appelé trace d'exécution. Il s'agit, par exemple, d'un enregistrement des paramètres FRES, N, W des constituants du supercalculateur d'apprentissage LHPC et/ou des évènements EVT réalisés pour exécuter les tâches de calcul d'apprentissage LCAL. Le standard "*standard workload format*" en anglais, abrégé SWF, fournit par exemple des modèles et des règles permettant de créer ou partager des journaux d'exécution.

Le journal d'exécution TR généré comprend par exemple le nombre N de tâches d'apprentissage LCAL en attente dans la file d'attente d'apprentissage LQ. Il peut également comprendre les instants où chaque tâche d'apprentissage LCAL a été ajoutée à la file d'attente d'apprentissage LQ ou encore la durée d'attente W de chaque tâche d'apprentissage LCAL dans ladite file d'attente d'apprentissage LQ. Le journal d'exécution peut également comprendre une liste de caractéristiques additionnelles associées à chaque tâche de calcul d'apprentissage LCAL lors de son ajout dans la file d'attente d'apprentissage LQ. Le journal d'exécution TR peut également comprendre le nombre FRES de ressources informatiques d'apprentissage non allouées. Il contient de manière avantageuse chaque évènement EVT lié à l'ordonnancement et l'exécution des tâches de calcul d'apprentissage LCAL.

Chaque historique d'exécution HIST est alors avantageusement déterminé à partir d'un journal d'exécution TR associé à l'exécution des tâches d'apprentissage LCAL. Un traitement des données du journal d'exécution TR permet ainsi d'en extraire toutes les informations permettant de constituer au moins un historique d'exécution HIST et réaliser par la suite l'apprentissage hors ligne de l'ordonnanceur SCH.

Ledit traitement des données permet par exemple de déterminer les états LQS, LHPCS de la file d'attente d'apprentissage LQ et du supercalculateur d'apprentissage LHPC à chaque instant d'un intervalle de temps. L'état LQS de la file d'attente d'apprentissage LQ comprend par exemple le nombre N de tâches d'apprentissage LCAL stockées dans la file d'attente d'apprentissage LQ et/ou le temps passé W dans ladite file d'attente LQ pour chaque tâche de calcul d'apprentissage LCAL. L'état LHPCS comprend par exemple un taux d'utilisation des ressources informatiques LRES du supercalculateur LHPC.

Ledit traitement des données du journal d'exécution TR peut également permettre d'extraire chaque action ACT réalisée par l'ordonnanceur d'apprentissage LSCH pour ordonnancer les tâches de calcul d'apprentissage LCAL pendant l'intervalle de temps.

Ledit traitement des données du journal d'exécution TR permet également d'obtenir une récompense REW associée à chaque action LACT réalisée par l'ordonnanceur d'apprentissage LSCH. La récompense REW permet de déterminer si l'action LACT en question est positive ou négative pour l'ordonnancement des tâches d'apprentissage LCAL. Autrement dit, chaque récompense indique le niveau de performance de l'action LACT à laquelle elle est associée. Pour cela, ledit traitement des données peut extraire les états LQS, LHPCS de la file d'attente d'apprentissage LQ et du supercalculateur d'apprentissage LHPC à l'instant précédent chaque action ACT et à l'instant de chaque action ACT. Chaque récompense REW est ainsi calculée par rapport aux états initiaux et finaux relatifs à chaque action LACT.

Une fois extraits ou calculés par un traitement des données du journal d'exécution TR, chaque état LQS, LHPCS de la file d'attente LQ et du supercalculateur d'apprentissage LHPC, chaque action LACT réalisée par l'ordonnanceur d'apprentissage LSCH et chaque récompense REW relative à chaque action LACT sont alors agrégés de manière à former l'historique d'exécution HIST. L'historique d'exécution HIST est ensuite stocké dans la base de données d'apprentissage LDB. Les données extraites et agrégées sont préférentiellement considérées à chaque instant d'un intervalle de temps, qui est antérieur à l'intervalle de temps sur lequel les tâches de calcul CAL à ordonnancer seront ordonnancés grâce au procédé PROC selon l'invention.

Une quantité de données d'apprentissage élevée permet d'améliorer l'apprentissage hors ligne OFRL de l'ordonnanceur SCH à entraîner. Il est alors avantageux que la base de données d'apprentissage LDB comprenne une pluralité d'historiques d'exécution HIST. Chaque historique d'exécution HIST peut être obtenu à partir d'un même supercalculateur d'apprentissage LHPC, par exemple sur des intervalles de temps différent, ou à partir de supercalculateurs d'apprentissage LHPC différents. Au moins un historique d'exécution HIST peut être obtenu du supercalculateur HPC.

De plus, il existe des bases de données publiques ou privées comprenant des journaux d'exécution au format SWF. Il est ainsi aisé d'extraire des historiques d'exécution HIST à partir de journaux partagées et ainsi constituer une base de données d'apprentissage LBD sans même recourir à la mise en œuvre d'un supercalculateur d'apprentissage LHPC.

La [FIG.5] présente schématiquement le principe d'apprentissage par renforcement hors ligne OFRL. Il consiste à extraire d'un historique HIST chacune des actions LACT(T) d'ordonnancement effectuées à un instant donné T par un ordonnanceur d'apprentissage LSCH ainsi que chaque récompense REW(T) qui lui est associée. Les états LQS(T-1), LQS(T), LHPCS(T-1), LHPCS(T) d'un supercalculateur d'apprentissage LHPC et de sa file d'attente d'apprentissage LQ sont extraits pour l'instant donné T et également pour l'instant précédent T-1 l'instant donné. Ainsi, lesdits états LQS, LHPCS à l'instant donné T correspondent à un état final, résultant de chacune des actions LACT. Lesdits états LQS, LHPCS à l'instant précédent T-1 l'instant donné correspondent à un état initial. L'ordonnanceur SCH calcule au moins un retour RTN qui correspond à la somme des récompenses REW accumulées sur une séquence d'actions. Chaque retour RTN permet à l'ordonnanceur SCH d'apprendre une séquence d'actions qui peut comprendre des actions dont les récompenses sont négatives, mais qui, considérées dans ladite séquence, permettent d'atteindre un retour RTN positif. L'apprentissage hors ligne OFRL permet ainsi d'entraîner l'ordonnanceur SCH sans immobiliser de supercalculateur, ni recourir à un simulateur de supercalculateur.

L'apprentissage par renforcement hors ligne OFRL permet d'obtenir un ordonnanceur SCH capable d'ordonnancer les tâches de calcul CAL de manière à améliorer une métrique. L'amélioration des métriques comprend par exemple la maximisation de l'utilisation des ressources RES du supercalculateur HPC, la maximisation d'un débit de tâches de calcul CAL, ou encore la réduction du temps d'attente des tâches de calcul CAL dans la file d'attente Q du supercalculateur HPC. L'apprentissage par renforcement hors ligne OFRL pouvant comprendre le calcul d'au moins un retour RTN, il est avantageux que la détermination de chaque récompense REW soit basée sur la métrique à améliorer. Pour cela, le traitement des données d'un journal d'exécution TR base avantageusement la détermination de chaque récompense REW sur la métrique à améliorer.

Lorsqu'un utilisateur ajoute une tâche de calcul CAL à la file d'attente Q du supercalculateur HPC, il peut être avantageux qu'il lui associe au moins une caractéristique de calcul. Il peut par exemple s'agir d'une durée d'exécution requise ou encore d'un nombre de ressources informatiques requises. Chaque caractéristique de calcul permet ainsi à l'utilisateur de spécifier des propriétés importantes pour la réalisation de chaque tâche de calcul CAL. Le nombre de ressources requises correspond par exemple à un nombre de nœuds de calcul nécessaire au bon déroulement des calculs. Il peut également s'agir d'un nombre de CPU ou GPU appartenant à des nœuds de calcul. Il peut également s'agir d'un nombre de nœuds de stockage nécessaire au stockage des données temporaires ou définitives utilisées lors des calculs. La durée d'exécution requise peut correspondre à la durée maximale d'exécution de la tâche de calcul CAL sur le supercalculateur HPC. Le nombre de ressources requises et la durée maximale requise correspondent par exemple à la quantité de ressources du supercalculateur HPC que l'utilisateur loue pendant un temps donné pour réaliser la tâche de calcul CAL.

Il est donc avantageux que chaque historique d'exécution HIST de la base de données d'apprentissage LDB comprenne au moins une caractéristique de calcul associée à chaque tâche de calcul d'apprentissage LCAL et de préférence les mêmes caractéristiques de calcul que chaque tâche de calcul CAL. Ainsi, l'apprentissage hors ligne OFRL peut prendre en compte, dans chaque historique d'exécution HIST, chaque caractéristique de calcul des tâches d'apprentissage LCAL. De la sorte, l'ordonnancement des tâches de calcul CAL pourra tirer parti de chaque caractéristique de calcul des tâches de calcul CAL.

Chaque caractéristique de calcul peut également être un identifiant de tâche, un identifiant d'utilisateur ou un identifiant d'un groupe d'utilisateurs.

Les métriques courantes utilisées pour développer une politique d'ordonnancement comprennent par exemple la maximisation de l'utilisation des ressources RES du supercalculateur HPC, la maximisation d'un débit de tâches de calcul CAL, ou encore la réduction du temps d'attente des tâches de calcul CAL dans la file d'attente Q du supercalculateur HPC. Quelle que soit la métrique considérée, elles tendent toutes à réduire le temps d'attente de chaque tâche de calcul CAL dans la file d'attente Q. Pour cela, le temps passé par chaque tâche de calcul CAL dans chaque file d'attente Q est avantageusement pris en compte dans l'ordonnancement des tâches de calcul CAL. Pour cela, chaque historique d'exécution HIST comprend avantageusement le temps passé par chaque tâche de calcul d'apprentissage LCAL dans chaque file d'attente d'apprentissage LQ. Le temps passé par chaque tâche de calcul d'apprentissage LCAL peut appartenir à l'état LQS de la file d'attente LQ associée à chaque supercalculateur d'apprentissage LHPC.

L'ordonnancement des tâches de calcul CAL dépend en grande partie des ressources informatiques RES disponibles pour réaliser chaque tâche. Il est donc avantageux que chaque historique d'exécution HIST comprenne, à chaque instant, une information sur la possibilité de démarrer l'exécution d'une tâche de calcul d'apprentissage LCAL audit instant. Cette information revient à déterminer si l'exécution de ladite tâche de calcul d'apprentissage peut être démarrée de manière immédiate. De cette manière, l'ordonnanceur SCH entraîné peut utiliser cette information lors de l'ordonnancement des tâches de calcul CAL.

L'information peut consister en un rapport entre un nombre de ressources informatiques requises par ladite tâche de calcul d'apprentissage LCAL et le nombre de ressources informatiques LRES non allouées du supercalculateur d'apprentissage LHPC. Ainsi, lorsque le rapport est inférieur ou égale à 1, l'exécution de la tâche de calcul d'apprentissage peut débuter. En revanche, lorsque le rapport est supérieur à 1, les ressources disponibles, c'est à dire non allouées, sont insuffisantes. Par ressources non allouées, on entend des ressources destinées à exécuter une tâche de calcul d'apprentissage mais non mise en œuvre dans l'exécution d'une tâche de calcul d'apprentissage LCAL à l'instant considéré.

Ainsi, de manière avantageuse, chaque historique d'exécution HIST peut comprendre un rapport entre un nombre de ressources informatiques requises par une tâche de calcul d'apprentissage LCAL et le nombre de ressources informatiques non allouées du supercalculateur d'apprentissage LHPC considéré. De manière préférée, chaque historique d'exécution HIST comprend ledit rapport à chaque instant donné et pour chaque tâche de calcul d'apprentissage LCAL. De la sorte, l'ordonnanceur SCH entraîné est capable de déterminer, à un instant donné, les tâches de calcul CAL qui pourraient voir leur exécution débuter.

Toutefois, afin d'améliorer l'apprentissage hors ligne OFRL et donc la politique d'ordonnancement obtenue, il peut être avantageux de fournir une information lors de l'apprentissage sur la possibilité de démarrer l'exécution d'une tâche de calcul d'apprentissage LCAL à un instant futur. L'ordonnanceur SCH peut ainsi apprendre à reporter l'exécution d'une tâche CAL pour, par exemple, démarrer de manière immédiate l'exécution d'une autre tâche CAL. Pour cela, chaque historique d'exécution HIST peut comprendre également, à chaque instant donné de l'intervalle de temps, un rapport entre un nombre de ressources informatiques requises par une tâche de calcul d'apprentissage LCAL à l'instant donné et un nombre de ressources informatiques LRES non allouées du supercalculateur d'apprentissage LHPC à au moins un instant futur postérieur à l'instant donné. De manière préférée, chaque instant futur considéré correspond à quelques coups d'une horloge interne de l'ordonnanceur SCH par rapport à l'instant donné. Il s'agit par exemple de 1 à 4 coups d'horloge interne.

Le procédé PROC, selon le mode de mise en œuvre de la [FIG. 3], comprend, après l'étape d'entraînement hors ligne OFRL, une étape d'utilisation UTIL de l'ordonnanceur SCH entraîné sur l'ensemble de tâches de calcul CAL stocké dans la file d'attente Q du supercalculateur HPC.

Ont été obtenus des résultats relatifs à un ordonnancement mis en œuvre par un ordonnanceur ayant été développé par :
- une méthode heuristique ;
- un apprentissage en ligne ; et
- un apprentissage hors ligne selon l'invention.

La métrique comparée est le temps d'attente moyen d'une tâche de calcul dans la file d'attente d'un supercalculateur. Le temps d'attente moyen est alors égal à 100 s lorsque l'ordonnancement est réalisé par un ordonnanceur développé au moyen de la méthode heuristique. Le temps d'attente moyen est à 138 s lorsque l'ordonnanceur est entraîné par un apprentissage en ligne, tel que proposé par l'art antérieur. Le temps d'attente moyen est égal à 94 s lorsque les tâches de calcul CAL sont ordonnancées par le procédé PROC selon l'invention, c'est-à-dire comprenant un apprentissage par renforcement hors ligne OFRL.

Un temps d'attente moyen réduit indique que l'utilisation des ressources informatiques RES du supercalculateur HPC est optimisée. L'énergie consommée par le supercalculateur HPC pour calculer un même ensemble de tâches de calcul CAL est donc réduite.

## Revendications

1. Procédé (PROC) d'ordonnancement d'un ensemble de tâches de calcul (CAL) stocké dans une file d'attente (Q) d'un supercalculateur (HPC), l'ordonnancement comprenant la planification de l'exécution de chaque tâche de calcul (CAL) de l'ensemble de tâches de calcul (CAL) par le supercalculateur (HPC) et l'allocation d'au moins une ressource informatique (RES) du supercalculateur (HPC) à l'exécution de chaque tâche de calcul (CAL) de l'ensemble de tâches de calcul (CAL), le procédé (PROC) comprenant les étapes suivantes :
- l'apprentissage par renforcement hors ligne (OFRL) d'un ordonnanceur (SCH) sur une base de données d'apprentissage (LDB) pour obtenir un ordonnanceur entraîné capable d'ordonnancer un ensemble de tâches de calcul (CAL), la base de données d'apprentissage comprenant au moins un historique d'exécution (HIST), chaque historique d'exécution étant associé à un supercalculateur d'apprentissage (LHPC) et comprenant, à chaque instant donné d'un intervalle de temps :
- un état (LQS) d'une file d'attente (LQ) du supercalculateur d'apprentissage (LHPC) à l'instant donné, ladite file d'attente (LQ) stockant un ensemble de tâches de calcul d'apprentissage (LCAL) ;
- un état (LHPCS) du supercalculateur d'apprentissage (LHPC) à l'instant donné ;
- chaque action (LACT) relative à l'ordonnancement des tâches de calcul d'apprentissage (LCAL) effectuée à l'instant donné, ledit ordonnancement étant mis en œuvre par un ordonnanceur d'apprentissage (LSCH) sur la base de l'état (LQS) de la file d'attente (LQ) du supercalculateur d'apprentissage (LHPC) et de l'état (LHPCS) du supercalculateur d'apprentissage (LHPC) à l'instant précédent l'instant donné ;
- une récompense (REW) relative à chaque action (LACT), chaque récompense (REW) étant calculée sur la base de l'état (LQS) de la file d'attente (LQ) du supercalculateur d'apprentissage (LHPC) et de l'état (LHPCS) du supercalculateur d'apprentissage (LHPC) à l'instant donné et à l'instant précédent l'instant donné ;
- l'utilisation (UTIL) de l'ordonnanceur (SCH) entraîné sur l'ensemble de tâches de calcul (CAL) stocké dans la file d'attente (Q) du supercalculateur (HPC).

2. Procédé (PROC) selon la revendication précédente, dans lequel chaque historique d'exécution (HIST) est obtenu à partir d'un journal d'exécution (TR) du supercalculateur d'apprentissage correspondant.

3. Procédé (PROC) selon l'une des revendications précédentes, dans lequel l'ordonnanceur (SCH) entraîné est capable d'ordonnancer un ensemble de tâches de calcul (CAL) de manière à optimiser une métrique et dans lequel chaque récompense (REW) est basée sur ladite métrique.

4. Procédé (PROC) selon l'une des revendications précédentes, dans lequel l'étape d'apprentissage comporte une sous-étape de calcul par l'ordonnanceur (SCH), d'au moins un retour (RTN) correspondant à une somme d'une pluralité de récompenses (REW).

5. Procédé (PROC) selon l'une des revendications précédentes, dans lequel chaque historique d'exécution (HIST) comprend, à chaque instant donné de l'intervalle de temps, au moins une caractéristique de calcul associée à chaque tâche de calcul d'apprentissage (LCAL).

6. Procédé (PROC) selon la revendication précédente, dans lequel chaque caractéristique de calcul peut être choisie parmi le groupe de caractéristiques suivant : une durée d'exécution requise, un nombre de ressources informatiques requises, un identifiant de tâche, un identifiant d'utilisateur ou un identifiant d'un groupe d'utilisateurs.

7. Procédé (PROC) selon la revendication précédente, dans lequel le nombre de ressources informatiques requises comprend un nombre de nœuds de calcul requis ou un nombre de nœuds de stockage requis.

8. Procédé (PROC) selon l'une des revendications précédentes, dans lequel chaque historique d'exécution (HIST) comprend en outre, à chaque instant donné de l'intervalle de temps, le temps passé par chaque tâche de calcul d'apprentissage (LCAL) dans la file d'attente (LQ) correspondante.

9. Procédé (PROC) selon l'une des revendications précédentes, dans lequel chaque historique d'exécution (HIST) comprend, à chaque instant donné de l'intervalle de temps et pour chaque tâche de calcul d'apprentissage (LCAL), une information sur la possibilité de démarrer l'exécution de ladite tâche de calcul d'apprentissage (LCAL) audit instant donné.

10. Procédé (PROC) selon l'une des revendications précédentes, dans lequel chaque historique d'exécution (HIST) comprend, à chaque instant donné de l'intervalle de temps et pour chaque tâche de calcul d'apprentissage (LCAL), un rapport entre un nombre de ressources informatiques requises (RRES) par ladite tâche de calcul d'apprentissage (LCAL) et un nombre de ressources informatiques non allouées du supercalculateur d'apprentissage (LHPC).

11. Procédé (PROC) selon l'une des revendications précédentes, dans lequel chaque historique d'exécution (HIST) comprend également, à chaque instant donné de l'intervalle de temps et pour chaque tâche de calcul d'apprentissage (LCAL), un rapport entre un nombre de ressources informatiques requises (RRES) par ladite tâche de calcul d'apprentissage et un nombre de ressources informatiques non allouées du supercalculateur d'apprentissage (LHPC) à au moins un instant futur postérieur à l'instant donné.

12. Procédé (PROC) selon l'une des revendications précédentes, dans lequel l'apprentissage par renforcement hors ligne (OFRL) met en œuvre une régression pondérée par un avantage.

13. Environnement de calcul (ENV) configuré pour mettre en œuvre le procédé (PROC) d'ordonnancement selon l'une des revendications précédentes, l'environnement de calcul (ENV) comprenant :
- un module de calcul (MOD) configuré pour réaliser l'apprentissage par renforcement hors ligne de l'ordonnanceur (SCH) sur la base de données d'apprentissage (LDB) ;
- au moins un module de stockage (MEM) configuré pour stocker la base de données d'apprentissage (LDB) ;
- le supercalculateur (HPC) comportant la file d'attente (Q) sur laquelle est stocké l'ensemble de tâches de calcul (CAL) à ordonnancer, configuré pour utiliser l'ordonnanceur (SCH) entraîné par le module de calcul (MOD) sur l'ensemble de tâches de calcul (CAL) à ordonnancer.

14. Programme d'ordinateur comprenant des instructions qui, lorsque le programme est exécuté par un ordinateur, conduisent celui-ci à mettre en œuvre le procédé selon l'une des revendications 1 à 12.
